(19) Europäisches Patentamt
European Patent Office
Office européen des brevets

(11) **EP 2 145 738 A2**

(12) # EUROPEAN PATENT APPLICATION

(43) Date of publication:
**20.01.2010 Bulletin 2010/03**

(51) Int Cl.:
***B25J 9/16*** (2006.01)

(21) Application number: **09162458.5**

(22) Date of filing: **10.06.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **11.06.2008 IT TO20080450** | (71) Applicant: **OPM S.p.A.**<br>**12066 Monticello d'Alba (IT)**<br><br>(72) Inventor: **Gurrieri, Dario**<br>**12051 Alba (IT)**<br><br>(74) Representative: **Jorio, Paolo et al**<br>**Studio Torta S.r.l.**<br>**Via Viotti 9**<br>**10121 Torino (IT)** |

(54) **Method and device for sensing and controlling a product gripping operation**

(57) Method and device for sensing and controlling a product gripping operation; according to the method, a light beam (17) is projected in a plane of projection on a product (2), so as to trace at least one luminous line (20); the luminous line (20) is visualized by a video camera or camera (21) arranged outside the plane of projection; the frames acquired by the video camera or camera (21) are processed to obtain the position and/or the height of the products, to control the positioning of a gripping member that must pick the product up.

FIG. 1

## Description

The present invention relates to a method for sensing and controlling a product gripping operation, in particular for gripping foodstuff products to be packaged, to which the following description expressly refers but without any loss of generality.

The use of robotic arms equipped with a gripping member at the end to pick up foodstuff products from above, in order to transfer them to packaging boxes, is known in the prior art.

With the methods known in the prior art, the position of the products to be picked up and transferred, in particular for products being conveyed on a moving belt, is determined by processing the images obtained by one or more video cameras installed above the belt, upstream of the robotic arm.

The need is felt to recognize and be able to pick up products of different heights, without causing damage and using a vision system capable of obtaining sufficiently accurate information, regardless of the type of product, and of processing said data relatively quickly.

The purpose of the present invention is to provide a method for sensing and controlling a product gripping operation, which satisfies the need described above in a simple and inexpensive manner.

According to the present invention there is provided a method for sensing and controlling a product gripping operation, as set forth in claim 1.

The present invention also relates to a device for sensing and controlling a product gripping operation, as set forth in claim 14.

The present invention will now be described with reference to the accompanying drawings, illustrating a non-limiting embodiment thereof, in which:

- figure 1 is a schematic view of a preferred embodiment of a sensing and controlling device for a product gripping operation, according to the method of the present invention;
- figure 2 is a block diagram relating to some steps of the method of the present invention;
- figure 3 is a partial view of two matrices obtained in the steps of the method of figure 2;
- figure 4 shows, on an enlarged scale, part of a frame acquired by the device of figure 1; and
- figure 5 is a schematic illustration of some alternative embodiments of the sensing and controlling device of figure 1.

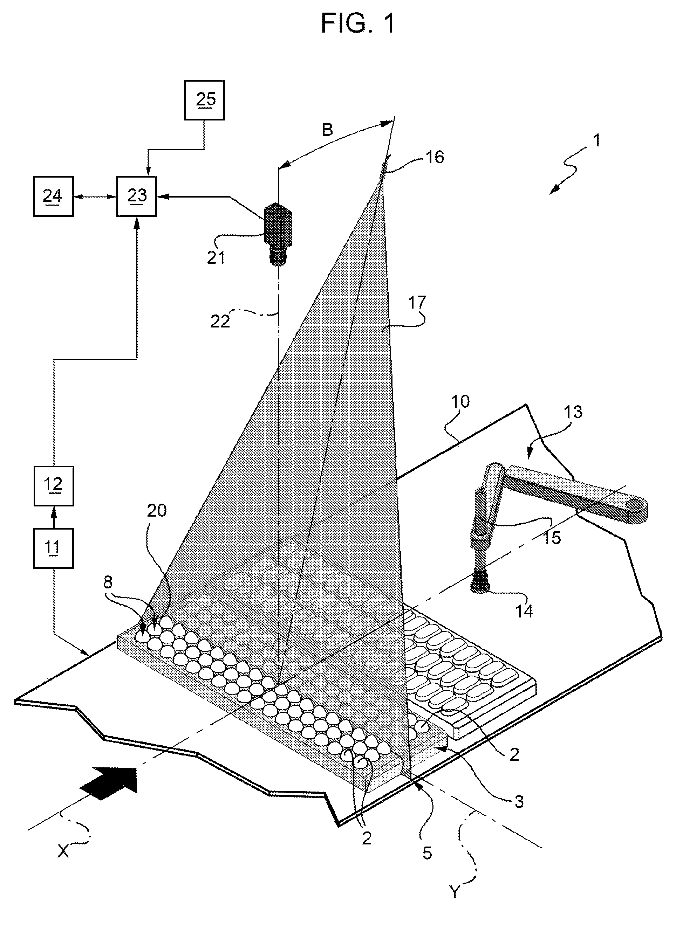

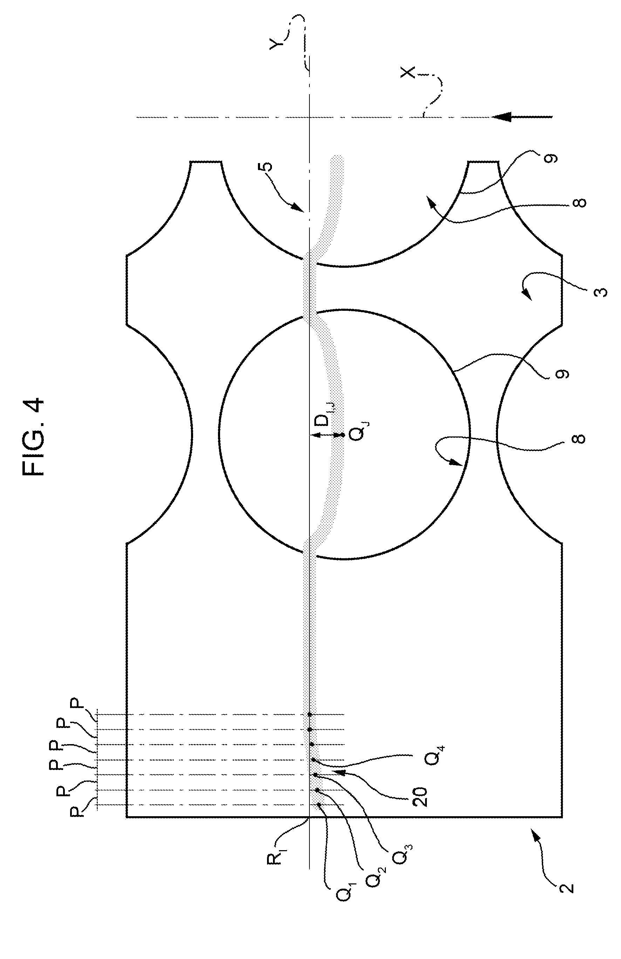

In figure 1, designated by number 1 is a sensing and controlling device, which is part of a packaging plant (not illustrated) for foodstuff products, and is capable of detecting the presence, position, and height of products 2 arranged on a supporting surface 3. The products 2 may differ from one another and have respective upper surfaces 8 that project upwards with respect to the surface 3 and each is defined, in a plan view, by a perimeter edge 9 (figure 4).

In particular, the surface 3 is defined by the flat upper surface of a conveyor 10 of a type known in the prior art (schematically and partially illustrated), for example a conveyor belt, which carries the products 2 along a horizontal longitudinal axis X. The products 2 are arranged in fixed positions on the surface 3 due to the effect of their weight (in an orderly fashion or at random), and the surface 3 moves; or the products 2 slide along the surface 3 and are pushed or pulled in a manner that is not illustrated.

The conveyor 10 comprises a motor 11 (schematically illustrated) with adjustable speed, and a position or speed sensor 12, which measures, directly or indirectly, the progress of the conveyor 10 and, thus, the feeding of the products 2 along the axis X instant by instant. The sensor 12 is preferably, but not exclusively, defined by an encoder connected to the motor 11.

The conveyor 10 passes through at least one gripping station 13, equipped with at least one gripping member 14 to pick up the products 2 from above. The gripping member 14 may, for example, consist of a suction cap or a gripper which is attached to a robotic arm (illustrated by way of example), or to a turntable or to a slide, i.e. a movable support that is operated in order to move the gripping member 14 horizontally and transfer the products 2 that have been picked up to a drop-off point (not illustrated). The pick-up position of each product 2 on the surface 3 is determined on the basis of the information obtained by the sensor 12 and by the device 1. The drop-off position is, instead, defined for example by a storage area, by packaging boxes, which may be stationary or moving, or by another conveyor.

The height of the gripping member 14 is preferably adjustable by operating an actuator 15, in particular an electrically driven actuator.

The device 1 comprises a light source 16, which is arranged in a fixed position above the conveyor 10 upstream of the station 13 (considering the direction of feeding of the products 2). The source 16 projects a light beam 17 on a test zone 5, which is elongated along a horizontal axis Y orthogonal to the axis X. The beam 17 lies in a plane of projection arranged transversely with respect to the axis X so as to trace a luminous line 20 on the surfaces 8 and 3. In particular, the beam 17 is defined by a laser stripe, i.e. a monochromatic, coherent and directional light.

Due to the relative motion between the products 2 and the source 16, the luminous line 20 passes over the surface of each product 2 along the axis X.

As illustrated in figure 4, in correspondence with the surface 3, the luminous line 20 comprises segments that are substantially rectilinear and substantially coincide with a straight reference line R parallel to the axis Y. In particular the straight line R has an equation that is stored and corresponds to the luminous line traced by the beam 17 on the surface 3 when no products 2 are present. In correspondence with the surface 8, the luminous line 20 comprises curved portions that are displaced along the axis X with respect to the substantially rectilinear segments and, thus, to the straight line R.

With reference to figure 1, the device 1 comprises a video camera or camera 21, having a CCD-type sensor and arranged in a fixed position, for example at approximately one metre from the conveyor 10, outside the plane of projection of the beam 17. In particular, the video camera 21 is directed towards the centre of the zone 5 in a direction 22 that lies in a vertical plane orthogonal to the plane of projection of the beam 17. The angle B between the direction 22 and the beam 17 is for example 15°.

The device 1 comprises an acquisition, processing and control unit 23, which is connected to the video camera 21 and stores, in a memory 24, an ordered sequence of frames visualized by the video camera 21. Each acquisition is determined by a respective trigger signal emitted, in particular, on the basis of the position signal received by the sensor 12. The frequency of acquisition is set by the user via an interface 25. In particular, via the interface 25 the user sets a resolution P (for example within a range of between 1 and 5 mm) that is equal to the longitudinal travel of the product 2 before the next frame is acquired and, thus, equal to the pitch between two successive frames.

The frames are processed by the unit 23, in order to determine the position of the products 2 and their height. The frames are first indexed, i.e. they are associated with a row index I, which corresponds to the position of each frame in the order in which they are acquired (or to the coordinate of each frame on the axis X calculated as a function of the signal of the sensor 12, for example with respect to a reference integral with the surface 3).

Each frame undergoes an image processing to define an ordered sequence of points Q of the luminous line 20, from one lateral extremity to the other of the frame or of the surface 3, so that the points Q are arranged along the axis Y at a regular pitch that is equal to the resolution P set by the user (block 100). The points Q of each frame are also indexed, i.e. they are associated with a column index J, which corresponds to their position in the ordered sequence on the respective frame (or to their coordinate on the axis Y).

For each point $Q_J$ and for each frame, the distance $D_{I,J}$ along the axis X from the straight line R is calculated (block 110).

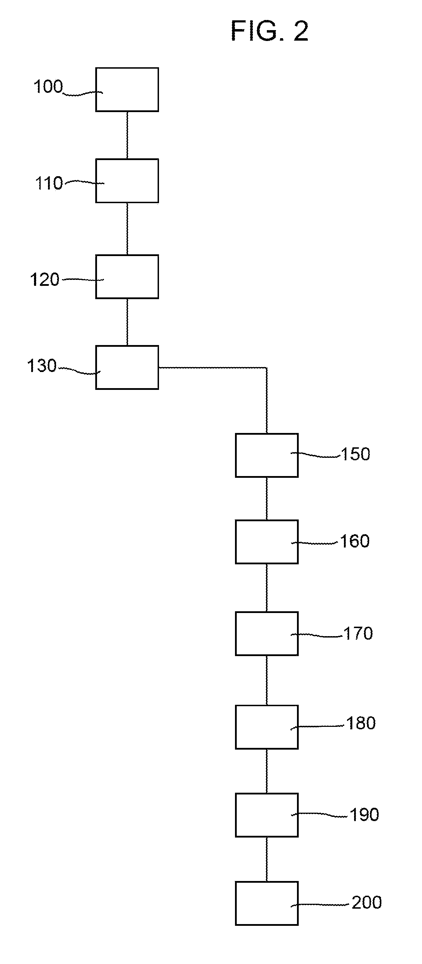

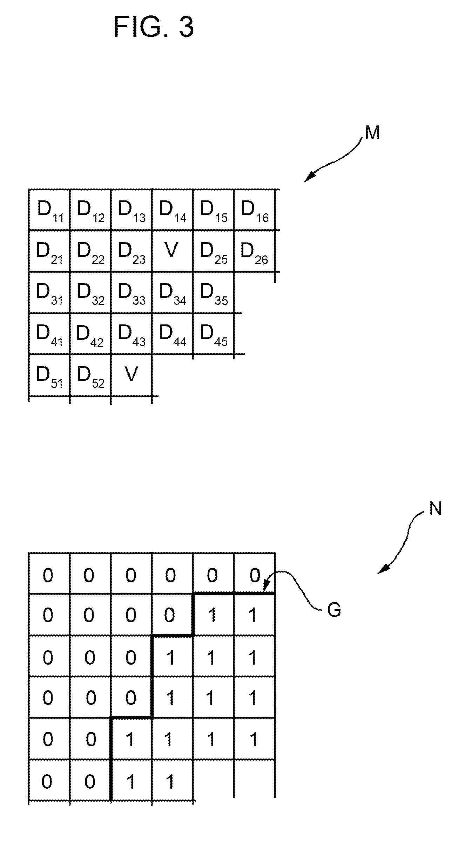

As schematically illustrated in figures 2 and 3, the calculated distances $D_{I,J}$ are stored in a distance matrix M (block 120), with rows ordered according to the row index I, i.e. according to the position of the frames along the axis X, and with columns ordered according to the column index J, i.e. according to the position of the points $Q_J$ along the axis Y in each frame.

The distances $D_{I,J}$ indicate the height of the points $Q_J$ with respect to the surface 3. The gain or sensitivity of the measurement between the distances $D_{I,J}$

and the height is determined by the angle B, in that the coefficient of proportionality between the two measurements is defined to a good level of approximation by the function tan(B).

For the points $Q_J$ where it was not possible to calculate the distance $D_{I,J}$ (for example if the luminous line 20 was not recognized due to optical disturbance) a subsequently identifiable constant V (for example V=-1) is assigned to the corresponding cells in the distance matrix M, instead of leaving these cells empty. The distance matrix M then undergoes a filtering process (block 130), to replace the constant V with values consistent with the measurement performed, by performing an interpolation of the distances $D_{I,J}$ calculated for the adjacent points Q and which are, thus, placed in the adjacent cells of the distance matrix M.

The distance matrix M is then binarized, (block 150), i.e. each of its cells is assigned a bit with a given logical value, according to the value of the distance $D_{I,J}$ in order to obtain a matrix of bits N. If the distance $D_{I,J}$ is equal to zero, or in any case less than a given threshold close to zero so as also to consider any possible background noise, the corresponding cell is assigned a bit with a logical value of zero; if the distance $D_{I,J}$ is greater than said threshold, a bit with a logical value of one is assigned to the corresponding cell. Thus, cells with logical-zero bits correspond to points Q arranged substantially in the plane of the surface 3; cells with logical-one bits correspond to points Q arranged higher up than the surface 3.

At this point, the groups G of adjacent cells in the bit matrix N all having logical-one bits are identified (block 160). Thus, each group G corresponds to a respective product 2. For each group G, the number of cells is counted to obtain a measure A that indicates the number of internal points Q and thus the plan of the corresponding product (block 170).

Data relating to each group G are processed in order to find the cell C that is arranged in a substantially central position, i.e. to approximately find a point $Q_C$ arranged approximately in the centre of the plan of the respective product 2 (block 180). In particular, the following formula is used:

$$I_C = I_{min} + (I_{max} - I_{min})/2$$

$$J_C = J_{min} + (J_{max} - J_{min})/2$$

where $I_{min}$ and $I_{max}$ are the row indices of the bottommost and uppermost cells in the group G; and $J_{min}$ and $J_{max}$ are the column indices of the leftmost and rightmost cells in the group G. $I_C$ and $J_C$ are the row and column indices of the point $Q_C$ and indicate the position of the point $Q_C$ along the axes X and, respectively, Y, according to the resolution P that has been set. Using the above formula, in practice, the point $Q_C$ is identified as the centre of gravity of the rectangle in which the points or cells of the group G are inscribed.

The indices $I_C$ and $J_C$ are used to define the cell inside the distance matrix M corresponding to the point $Q_C$ and thus the distance $D_C$ of the point $Q_C$ from the straight line R (block 190). Lastly, the height $H_C$ of the point $Q_C$ with respect to the surface 3 is calculated (block 200) :

$$H_C = D_C / \tan (B).$$

The unit 23 (or other connected control unit) uses the height $H_C$ to control the height of the gripping member 14, operating the device 15, to pick the product 2 up without the risk of damage or of missing the product 2.

According to the processing procedure described above, the maximum height of the product 2 is assumed to be equal to the height $H_C$. Alternatively, the maximum distance or the mean distance can be calculated for the points Q of each group G. According to another alternative embodiment, the height of each point $Q_J$ can be calculated, using the distance matrix M and the angle B, thus defining the complete shape of the surfaces 8.

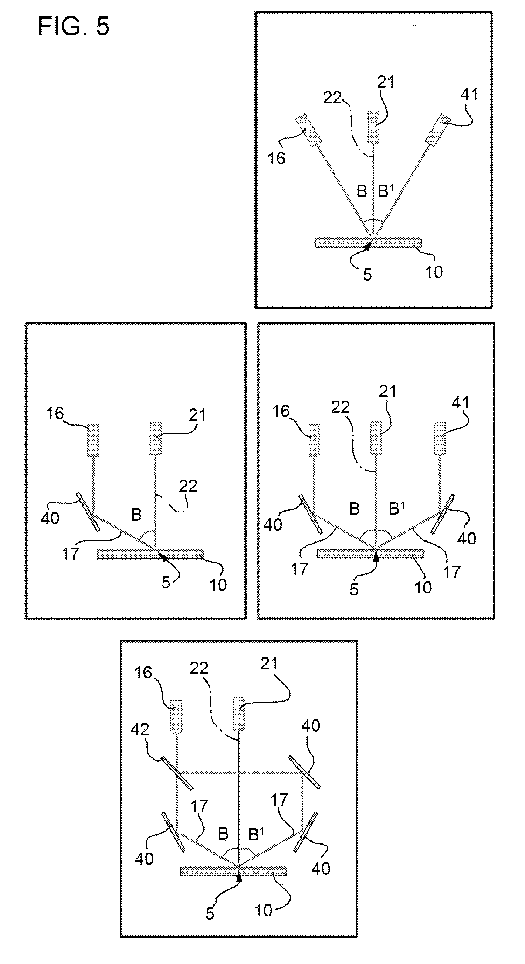

Figure 5 is a schematic illustration of some alternative embodiments of the device 1: in such alternative embodiments note that it is possible to use mirrors 40, and/or an additional light source 41, and/or a light beam splitter 42. With the solutions that envisage two light beams 17 (arranged on opposite sides of the direction 22 and incident in the zone 5 of the surface 3) luminous lines can be traced on the whole of the surface 8 (without any so-called "shadow zones"), regardless of the shape of the products 2 and of the angle of inclination of the light beams 17 (i.e. of the angles B and B'). The two luminous lines 20 traced by the light beams 17 are substantially parallel, they are visualized together in each frame, and are sufficiently spaced along the axis X to avoid optical interference or errors of interpretation of the points Q on the frames during processing.

From the above description it is apparent that visualizing the luminous line 20 from a point outside the plane of projection of the light beam 17, and thus in a direction 22 that forms an angle B other than zero with said plane, makes it possible to identify, in the form of the luminous line 20, distortions or displacements with respect to the straight line R. Said distortions or displacements, detected in at least one point of the luminous line 20, indicate the presence of a relief with respect to the surface 3 and can be processed to obtain the position of said relief on the surface 3 and a measure of its height, which can be used to place the gripping member 14 at the correct height.

The method described and claimed herein is insensitive to the type and material of the products 2, it does not alter the temperature of the products 2, and allows the conveyor 10 to be maintained at a high feeding speed.

With this method the user defines very few settings, and the device 1 is extremely simple to use, to install, to set and to service.

Lastly, from the above description, it is clear that modifications and variations may be made to the method and device 1 described herein without departing from the scope of the present invention as set forth in the appended claims.

The angle B could be an angle of other than 15°, for example it could be higher to achieve greater precision of height measurement; and/or the video camera or camera 21 could be arranged in different positions and/or the projection devices defined by the sources 16,41, the mirrors 40 and the splitter 42 could be arranged in different positions.

The method could even include the acquisition of a single frame with a single luminous line 20 for each product 2, said luminous line 20 being traced in an intermediate position at which the product 2 is presumably at the maximum height (in this case, there could be a sequence or array of numerical values instead of the matrices described above).

The same method could envisage a scanning motion by the light beam 17, instead of a feeding motion of the product 2 along the axis X; or the product 2 and the light beam 17 could both remain in fixed positions: in the latter case, for example, there could be a plurality of radial or parallel light beams, in order to trace a series of luminous lines that are spaced by the chosen resolution, and in order to acquire all the traced luminous lines together with a single image.

The products 2 could be associated with codes which are recognizable by a remote data transmission device (for example a bar code reader, or an RFID-type reader) in order to associate stored information with each product 2.

Lastly, the traced luminous line 20 could be a broken line.

**Claims**

1. Method for sensing and controlling a product gripping operation; the method comprising the following steps

   - visualizing an image;
   - processing said image in order to determine the presence and the position of a product (2);
   - controlling the positioning of a gripping member (14) as a function of the determined position of the product (2);

**characterized by** comprising the steps of

- generating a light beam (17) lying in a plane of projection in order to trace at least one luminous line (20) on an upper surface (8) of said product (2);
- visualizing said luminous line (20) from a vision point arranged outside said plane of projection;

and in that the image processing comprises the step of defining at least one point (Q) of said luminous line (20) with respect to a reference line (R).

2. Method according to claim 1, **characterized in that** the light beam (17) is a laser light beam.

3. Method according to any one of the previous claims, **characterized in that** the height of said gripping member (14) is controlled as a function of the position of the point (Q) with respect to said reference line.

4. Method according to claim 3, **characterized in that** the image processing comprises the step of determining the distance (D) of the defined point (Q) from said reference line (R).

5. Method according to any one of the previous claims, **characterized in that** the image processing comprises the following steps:

- defining a plurality of points (Q) of said luminous line (20), and
- calculating the distances (D) of said points (Q) from said reference line (R), in order to obtain a distance array (M).

6. Method according to claim 5, **characterized in that** the processing process comprises the following steps:

- comparing each distance (D) of the distance array (M) with a given threshold, and
- binarizing said distance array (M) on the basis of the comparison against said threshold, in order to obtain a bit array (N) with bits having a given logical value and each associated with a respective point (Q) of said luminous line (20).

7. Method according to claim 6, **characterized in that** said threshold is approximately equal to zero.

8. Method according to claim 6 or 7, **characterized in that** the image processing comprises the step of defining, in said bit array (N), adjacent groups of bits (G) with bits having a same logic value.

9. Method according to claim 8, **characterized in that** the image processing comprises the steps of:

- determining, in each adjacent group of bits (G), the position ($I_C$, $J_C$) of a bit or cell arranged in a substantially central position; and
- determining the height of the point ($Q_C$) associated with the bit or cell arranged in the substantially central position as a function of its distance ($D_C$) from said reference line (R).

10. Method according to any one of the previous claims, **characterized by** comprising the steps of:

- moving said product (2) and said light beam (17) with respect to one another in order to translate said luminous line (20) along a longitudinal axis (X), arranged transversely with respect to said plane of projection, and
- acquiring a plurality of frames of said luminous line (20) in sequence along said longitudinal axis (X).

11. Method according to claim 10, **characterized in that** said product (2) is moved along said longitudinal axis (X) and said light beam (17) is held in a fixed position.

12. Method according to any one of the previous claims, **characterized in that** two light beams are projected in a same test zone (5); said light beams being arranged on opposite sides of said vision point.

13. Method according to claim 12, **characterized in that** the two light beams trace respective luminous lines that are spaced from one another and displayed together in the same image.

14. Sensing and controlling device (1) for a product gripping operation, according to the method claimed in any one of the previous claims; the device comprising:

- vision means (21);
- image processing means (23) to determine the presence and the position of a product (2);
- control means (23) to position a gripping member (14) as a function of the determined position of the product (2);

**characterized by** comprising optical means (16) to project at least one light beam lying in a plane of projection in order to trace at least one luminous line (20) on an upper surface (8) of said product (2); in that said vision means (21) are arranged outside said plane of projection and are directed in a direction (22) such as to visualize the traced luminous line (20).

15. Device according to claim 14, **characterized in that** said optical means comprise at least one laser light source (16).

**16.** Device according to claim 14 or 15, **characterized in that** said optical means comprise at least two optical devices (16,41;40,42) arranged on opposite sides with respect to the direction (22) in which said vision means (21) are directed, to project two light beams (17).

**17.** Device according to claim 16, **characterized in that** the two optical devices are arranged in positions so as to trace respective luminous lines that are spaced and substantially parallel.

**18.** Device according to any one of the claims from 14 to 17, **characterized in that** said optical means are fixed, and **in that** it comprises:

    - conveyor means (10) to translate at least one product (2) along a longitudinal axis (X);
    - acquisition means (23,24) to store frames in sequence during the translation of said product (2).

# FIG. 1

# FIG. 2

100 — [ ]

110 — [ ]

120 — [ ]

130 — [ ]

[ ] — 150

[ ] — 160

[ ] — 170

[ ] — 180

[ ] — 190

[ ] — 200

# FIG. 3

M

| $D_{11}$ | $D_{12}$ | $D_{13}$ | $D_{14}$ | $D_{15}$ | $D_{16}$ |
|------|------|------|------|------|------|
| $D_{21}$ | $D_{22}$ | $D_{23}$ | V | $D_{25}$ | $D_{26}$ |
| $D_{31}$ | $D_{32}$ | $D_{33}$ | $D_{34}$ | $D_{35}$ | |
| $D_{41}$ | $D_{42}$ | $D_{43}$ | $D_{44}$ | $D_{45}$ | |
| $D_{51}$ | $D_{52}$ | V | | | |

N

G

| 0 | 0 | 0 | 0 | 0 | 0 |
|---|---|---|---|---|---|
| 0 | 0 | 0 | 0 | 1 | 1 |
| 0 | 0 | 0 | 1 | 1 | 1 |
| 0 | 0 | 0 | 1 | 1 | 1 |
| 0 | 0 | 1 | 1 | 1 | 1 |
| 0 | 0 | 1 | 1 | | |

FIG. 4

EP 2 145 738 A2

FIG. 5